# EUROPEAN PATENT APPLICATION

(11) **EP 3 978 746 A1**
(43) Date of publication of application: **06.04.2022**
(21) Application number: 21193893.1
(22) Date of filing: 31.08.2021
(51) Int. Cl.: F02M 61/16, B01D 29/46

(54) **ADJUSTABLE RING ASSEMBLY FOR TWO-DIMENSIONAL FILTRATION**

(30) Priority: 30.09.2020 US 202017038801
(71) Applicant: Caterpillar Inc., Peoria, IL 61629-9510 (US)
(72) Inventor: Hill, Adam, Pontiac, 61764 (US); Lewis, Stephen, Chillicothe, 61523 (US); Bannur Nagaraja, Manjunath, Naperville, 60564 (US)
(74) Representative: Boult Wade Tennant LLP

(57) **Abstract**

A filtration device (106, 200, 1000) includes a guide member (202, 1002) and an adjustable ring assembly (204, 400, 500, 600, 800). The guide member (202, 1002) is configured to be secured to an interior of a fuel device and includes a plurality of holes (228, 1018) to guide fuel therethrough. The adjustable ring assembly (204, 400, 500, 600, 800) is configured to be positioned within the interior of the fuel device to filter the fuel flowing through the fuel device. The adjustable ring assembly (204, 400, 500, 600, 800) has a plurality of stackable rings (230, 402, 502, 602, 802) that are concentrically aligned. A junction (410, 512, 610, 810) between a first ring and a second ring, of the plurality of stackable rings (230, 402, 502, 602, 802), defines a plurality of openings (412, 514, 612, 812) that fluidly communicate with the plurality of holes (228, 1018). The plurality of openings (412, 514, 612, 812) are smaller, respectively, than the plurality of holes (228, 1018).

## Description

### Technical Field

The present disclosure relates generally to a filtration device and, for example, to an adjustable ring assembly for two-dimensional filtration.

### Background

A diesel fuel injection system (e.g., a common rail injection system, a pump-line-nozzle injection system, and/or the like) delivers atomized fuel into cylinders of an engine. The engine, in turn, converts chemical energy stored in the fuel into mechanical work. By delivering the fuel in an atomized state, the diesel fuel injection system increases power and fuel economy of the engine and decreases noise. However, due to the high injection pressure of the fuel, which may range from 25,000 psi to 36,000 psi, components of the diesel fuel injection system may be susceptible to damage and/or leaks.

Furthermore, the presence of debris particles in the fuel (e.g., dust, rust, sand, and/or the like) may render some components even more susceptible to damage and/or leaks. For example, as the fuel passes through a fuel injector of the diesel fuel injection system, the debris particles may build up within a passage and obstruct the fuel. As a result, the fuel injector may provide insufficient fuel to the engine, excessive fuel to the engine, and/or an uneven supply of fuel to the engine. In some cases, the debris particles may damage the fuel injector and/or one or more other components of the diesel fuel injection system.

U.S. Patent No. 7,210,585, which issued to Hajek on May 1, 2007, discloses an edge filter assembly. The edge filter assembly includes a housing supporting a filter subassembly. A plug, having a centrally located orifice, is positioned downstream relative to the filter subassembly. The subassembly may include one or more identical filter elements to provide adequate filtration without undue flow restriction.

The filtration device of the present disclosure solves one or more of the problems set forth above and/or other problems in the art.

### Summary

In some implementations, a filtration device includes a guide member that is configured to be secured to an interior of a fuel device, wherein the guide member has a plurality of holes to guide fuel therethrough; and an adjustable ring assembly that is configured to be positioned within the interior of the fuel device to filter the fuel flowing through the fuel device, wherein the adjustable ring assembly has a plurality of stackable rings that are concentrically aligned, wherein a junction between a first ring and a second ring, of the plurality of stackable rings, defines a plurality of openings that fluidly communicate with the plurality of holes, wherein the plurality of openings are smaller, respectively, than the plurality of holes.

In some implementations, an adjustable ring assembly is configured to be positioned within a passage of a fuel device for two-dimensional filtration of the fuel. The adjustable ring assembly has a plurality of stackable rings that are concentrically aligned, wherein a junction between a first ring and a second ring, of the plurality of stackable rings, defines a plurality of openings that are configured to prevent debris particles within the fuel from passing through the adjustable ring assembly, wherein an opening, of the plurality of openings, has a shape in a form of a substantially regular polygon.

In some implementations, a fuel system includes a common rail; and a plurality of fuel devices configured to receive fuel from the common rail, a fuel device of the plurality of fuel devices comprising: an adjustable ring assembly having a plurality of stackable rings that are concentrically aligned, wherein a junction between a first ring and a second ring, of the plurality of stackable rings, defines a plurality of openings that are configured to prevent debris particles within the fuel from passing through the adjustable ring assembly.

### Brief Description of the Drawings

Fig. 1 is a diagram of an example fuel system, according to one or more aspects of the present disclosure.
Fig. 2 is a diagram of an example filtration device in a disassembled state, according to one or more aspects of the present disclosure.
Fig. 3 is a diagram of the filtration device of Fig. 2 in an assembled state, according to one or more aspects of the present disclosure.
Fig. 4 is a diagram of an example adjustable ring assembly, according to one or more aspects of the present disclosure.
Fig. 5 is a diagram of an example adjustable ring assembly, according to one or more aspects of the present disclosure.
Fig. 6 is a diagram of an example adjustable ring assembly, according to one or more aspects of the present disclosure.
Fig. 7 is a diagram of a ring, according to one or more aspects of the present disclosure.
Fig. 8 is a diagram of an example adjustable ring assembly, according to one or more aspects of the present disclosure.
Fig. 9 is a diagram of a ring, according to one or more aspects of the present disclosure.
Fig. 10 is a diagram of an example filtration device, according to one or more aspects of the present disclosure.

### Detailed Description

This disclosure relates to a filtration device, which is applicable to any system involved in filtering fluid. For example, the system may be a fuel system, a power system, and/or the like. The system may be implemented in a vehicle (e.g., a motor vehicle, a railed vehicle, a watercraft, an aircraft), a generator, or another machine.

To simplify the explanation below, the same reference numbers may be used to denote like features. The drawings may not be to scale.

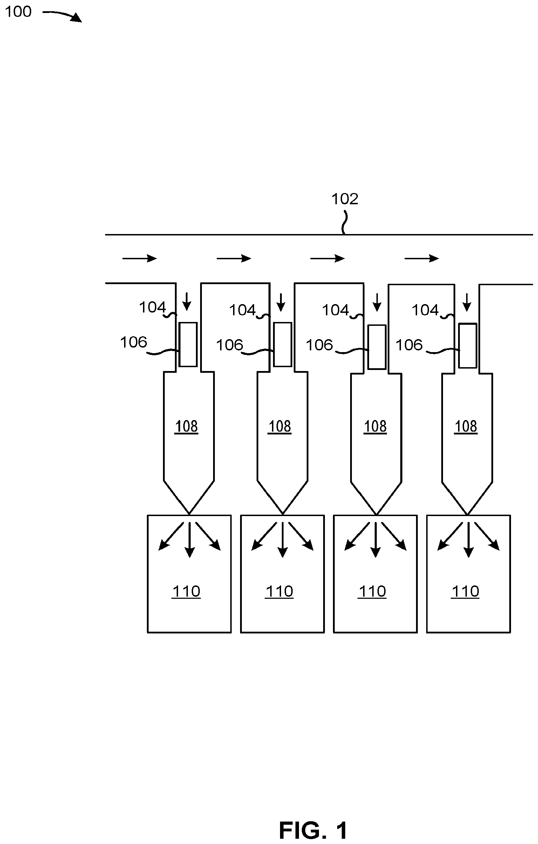

Fig. 1 is a diagram of an example fuel system 100. The fuel system 100 is configured to control delivery of fuel to allow chemical energy stored in the fuel to be converted into mechanical work (e.g., to propel a vehicle, to power a generator). The fuel system 100 includes a common rail 102, a plurality of passages 104, a plurality of filtration devices 106, a plurality of fuel injectors 108 (e.g., 6 fuel injectors, 8 fuel injectors, 12 fuel injectors), and a plurality of cylinders 110 (e.g., 6 cylinders, 8 cylinders, 12 cylinders). In some implementations, the fuel system 100 may include a fuel tank, one or more pumps, an electronic control unit, one or more sensors, and/or other devices.

The common rail 102 is a conduit that is configured to distribute pressurized fuel along the plurality of passages 104. The fuel is a fluid that is configured to combust within the plurality of cylinders 110 to drive a drivetrain. For example, the fuel may be a diesel fuel, such as petroleum diesel fuel, a synthetic diesel fuel, a biodiesel fuel, or another type of fuel. Due to environmental conditions, the fuel may contain debris particles (e.g., rust, dust, and/or sand), which may vary in size and/or material. To properly combust within the plurality of cylinders 110, the fuel may be distributed at a pressure in a range of approximately 25,000 pounds per square inch (psi) to approximately 36,000 psi.

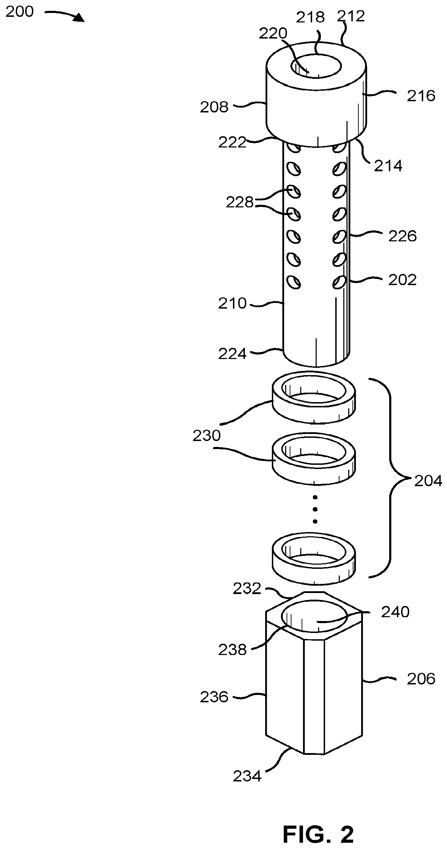

The plurality of passages 104 are conduits that are configured to guide the fuel into respective bodies of the fuel injectors 108. For example, the plurality of passages 104 may be provided in respective fuel devices, such as fuel lines, fuel accumulators (e.g., outlets of the fuel accumulators), and/or the plurality of fuel injectors 108 (e.g., inlets of the plurality of fuel injectors 108). To minimize a possibility of debris particles clogging and/or damaging one or more of the plurality of fuel injectors 108, the plurality of passages 104 may respectively include the plurality of filtration devices 106, alternatives of which will be described below in connection with Figs. 2-3 and 10.

The plurality of fuel injectors 108 are mechanisms that are configured to introduce the pressurized fuel into the plurality of cylinders 110. For example, the plurality of fuel injectors 108 may be piezoelectric fuel injectors, electromagnetic fuel injectors, and/or another type of fuel injector. Each includes a respective plunger slidably mounted therein to regulate an amount of the fuel being dispersed into a respective cylinder.

The plurality of cylinders 110 are engine components that are configured to convert the chemical energy stored in the fuel into mechanical work. For example, the plurality of cylinders 110 may be arranged in an in-line configuration, a "V" configuration, or another suitable configuration. Each includes a respective piston movably mounted therein to travel in a 4-stroke cycle to cause the fuel to combust, which drives the drivetrain.

As indicated above, Fig. 1 is provided as an example. Other examples may differ from what is described with regard to Fig. 1. The number and arrangement of devices shown in Fig. 1 are provided as an example. In practice, there may be additional devices, fewer devices, different devices, differently arranged devices than those shown in Fig. 1.

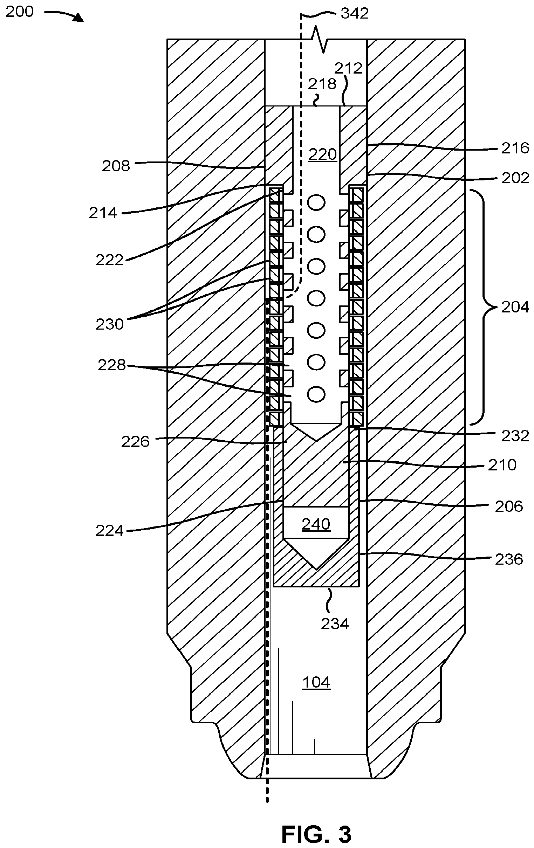

Figs. 2-3 are diagrams of a filtration device 200, according to one or more aspects of the present disclosure. Fig. 2 is an isometric view of the filtration device 200 in a disassembled state. Fig. 3 is a cross-sectional view of the filtration device 200 in an assembled state within the passage 104 of a fuel device (e.g., as an inlet of a fuel injector 108, an outlet of a fuel accumulator, and/or a fuel line). It should be understood that the filtration device 200 may correspond to one or more of the plurality of filtration devices 106 of the fuel system 100 of Fig. 1.

As shown in Figs. 2-3, the filtration device 200 includes a guide member 202, an adjustable ring assembly 204, and a support member 206. The guide member 202 is structured and arranged to guide fuel along the passage 104 into the adjustable ring assembly 204. The adjustable ring assembly 204 is structured and arranged to minimize a possibility of debris particles within the fuel obstructing flow of the fuel and/or damaging the fuel injector 108 (e.g., of the plurality of fuel injectors 108). The support member 206 is structured and arranged to support the adjustable ring assembly 204 within the passage 104. To withstand fuel pressure in a range from approximately 25,000 psi to approximately 36,000 psi, the filtration device 200 may be formed of steel (e.g., American Iron and Steel Institute (AISI) 4000 steel and/or AISI 4120 steel) or another type of metal.

The guide member 202 includes a head portion 208 and a body portion 210. The head portion 208, which is substantially cylindrical, includes an upper surface 212, a lower surface 214, and a circumferential surface 216 connecting the upper surface 212 to the lower surface 214. The upper surface 212 includes an upper opening 218 that communicates with a channel 220 that extends along a longitudinal direction from the head portion 208 into the body portion 210. The circumferential surface 216 is configured to be fixedly mounted within the passage 104 (e.g., via a friction-fit attachment, via a threaded attachment, or a different type of attachment), as shown in Fig. 3. The body portion 210, which may be substantially cylindrical, includes a first end 222, a second end 224, and an outer surface 226 that connects the first end 222 to the second end 224. The first end 222 is integrally connected to the lower surface 214 of the head portion 208. The outer surface 226 includes a plurality of holes 228 (e.g., in a range from approximately 4 holes to approximately 100 holes) that fluidly communicate with the channel 220 to allow the fuel to travel from an interior of the guide member 202 to an exterior of the guide member 202. For example, the plurality of holes 228 may extend in directions that are substantially perpendicular to the longitudinal direction.

To securely fit within the passage 104, as shown in Fig. 3, the circumferential surface 216 of the head portion 208 may have a diameter substantially equal to a diameter of the passage 104. For example, the diameter of the circumferential surface 216 may be approximately 6 millimeters (mm). To provide a space within the passage 104 for the adjustable ring assembly 204, as further shown in Fig. 3, the outer surface 226 of the body portion 210 may have a diameter smaller than the diameter of the circumferential surface 216. For example, the diameter of the outer surface 226 may be in a range from approximately 1.5 mm to approximately 3.5 mm. Other shapes and dimensions of the guide member 202 are possible. For example, the body portion 210 may be substantially in the shape of a rectangular prism, a hexagonal prism, or another similar shape.

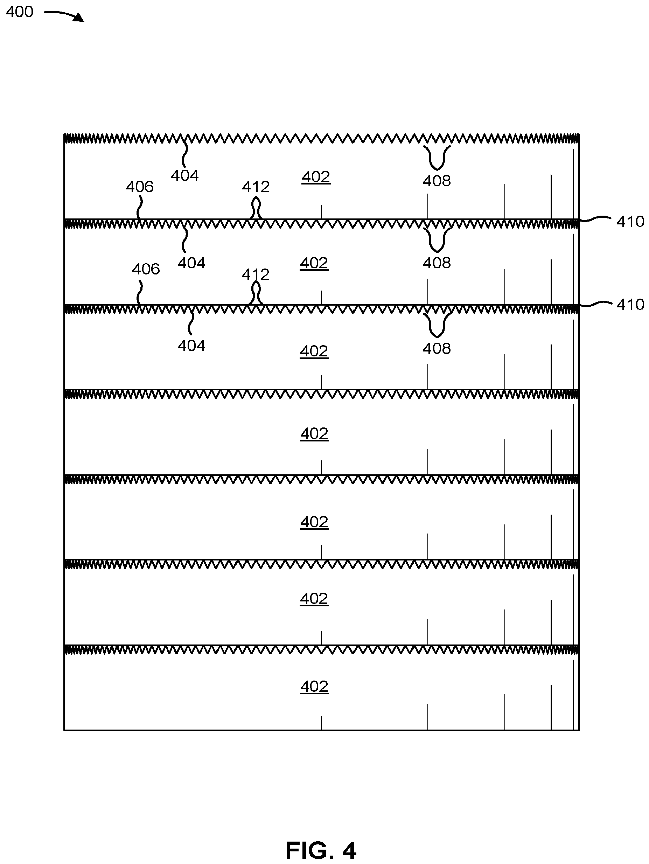

The adjustable ring assembly 204, alternatives of which will be described below in connection with Figs. 4-9, includes a plurality of stackable rings 230 (e.g., in a range from approximately 2 rings to approximately 30 rings). The plurality of stackable rings 230 are substantially identical and interchangeable. Thus, a quantity of the plurality of stackable rings 230 in the adjustable ring assembly 204 may be adjusted (e.g., increased or decreased) to achieve a desired degree of filtration. As will be described below, each ring 230, of the plurality of stackable rings 230, has a geometry that is configured to prevent the debris particles in the fuel from passing through the adjustable ring assembly 204. As shown in Fig. 3, the plurality of stackable rings 230 are configured to be concentrically aligned and abuttingly arranged on the body portion 210 of the guide member 202. In other words, the plurality of stackable rings 230 may be stacked on the body portion 210.

In order to withstand a fuel pressure in a range of approximately 25,000 psi to approximately 36,000 psi, each ring 230 may have a thickness, along a radial direction, in a range of approximately 1 mm to approximately 2 mm. To provide a space within the passage 104 for the fuel to pass through, each ring 230 may have an outer diameter smaller than the diameter of the passage 104. For example, the outer diameter of each ring 230 may be in a range from approximately 4.5 mm to approximately 5.5 mm. Other dimensions of the plurality of stackable rings 230 are possible.

The support member 206 includes a top surface 232, a bottom surface 234, and a peripheral surface 236 connecting the top surface 232 to the bottom surface 234. The top surface 232 includes a top opening 238 that communicates with a recess 240, which extends along the longitudinal direction. The recess 240, as shown in Fig. 3, is configured to directly contact and fixedly engage the outer surface 226 of the body portion 210 (e.g., via a friction-fit attachment, a threaded attachment, or a different type of attachment). Thus, the support member 206 is configured to clamp the adjustable ring assembly 204 between the lower surface 214 of the head portion 208 and the top surface 232 of the support member 206.

To allow the fuel to continue to pass through the passage 104, the peripheral surface 236 of the support member 206 may have a width smaller than the diameter of the passage 104. For example, the peripheral surface 236 may be in a range from approximately 4 mm to approximately 5.5 mm. To securely receive the body portion 210 of the guide member 202 therein, as shown in Fig. 3, the recess 240 may have a diameter substantially equal to the diameter of the outer surface 226 of the body portion 210. For example, the diameter of the recess 240 may be approximately 1.5 mm to approximately 3.5 mm. Other shapes and dimensions of the guide member 202 are possible. For example, just as the body portion 210 may be substantially in the shape of a rectangular prism, a hexagonal prism, or another similar shape, so too may the recess 240. Furthermore, while the peripheral surface 236 is shown in Fig. 2 as having a plurality of a flattened side portions (e.g., 8 side portions), it should be understood that other shapes are possible.

In use, when the filtration device 200 is in the assembled state within the passage 104 of the fuel device, as shown in Fig. 3, the fuel may travel along any number of paths to pass through the filtration device 200. For example, while traveling along a path 342, the fuel may enter the upper opening 218 of the guide member 202 and flow along the channel 220. The fuel may exit the channel 220 via one or more of the plurality of holes 228 in the body portion 210 of the guide member 202, pass through the adjustable ring assembly 204, and flow through a space between an exterior of the filtration device 200 and a surface of the passage 104. In such a process, the adjustable ring assembly 204 may prevent the debris particles from entering the space and traveling further along the passage 104.

As indicated above, Figs. 2-3 are provided as examples. Other examples may differ from what is described with regard to Figs. 2-3. The filtration device 200 may include additional components, fewer components, different components, differently arranged components, and/or differently shaped components than those shown in Figs. 2-3.

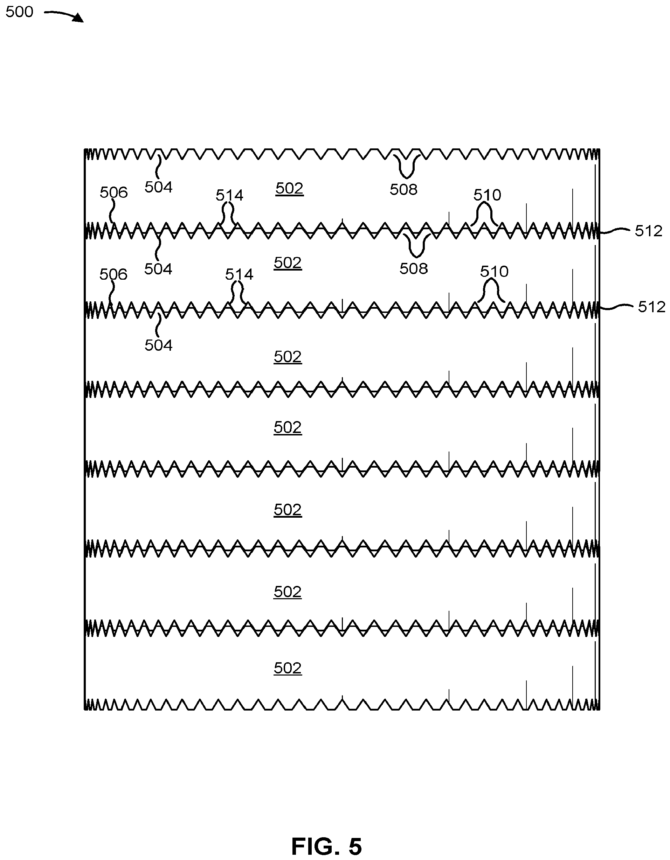

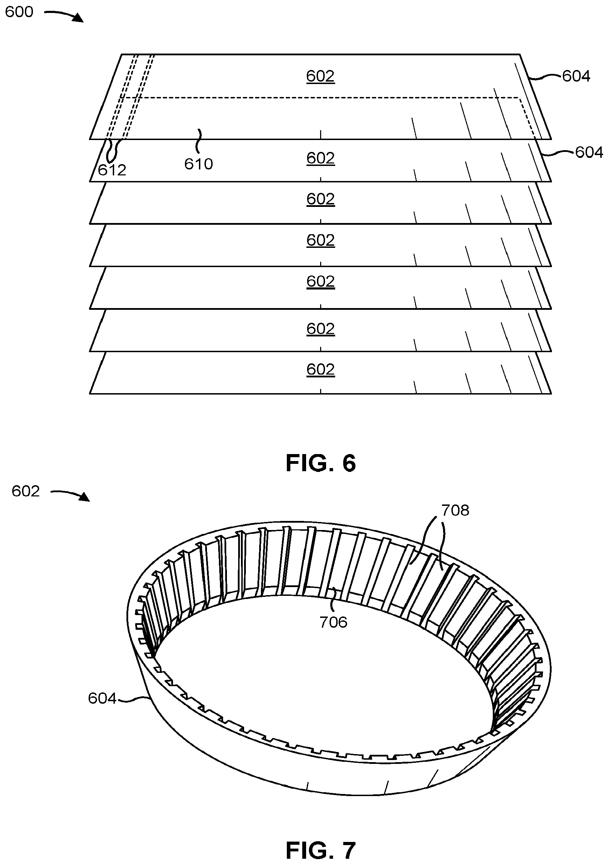

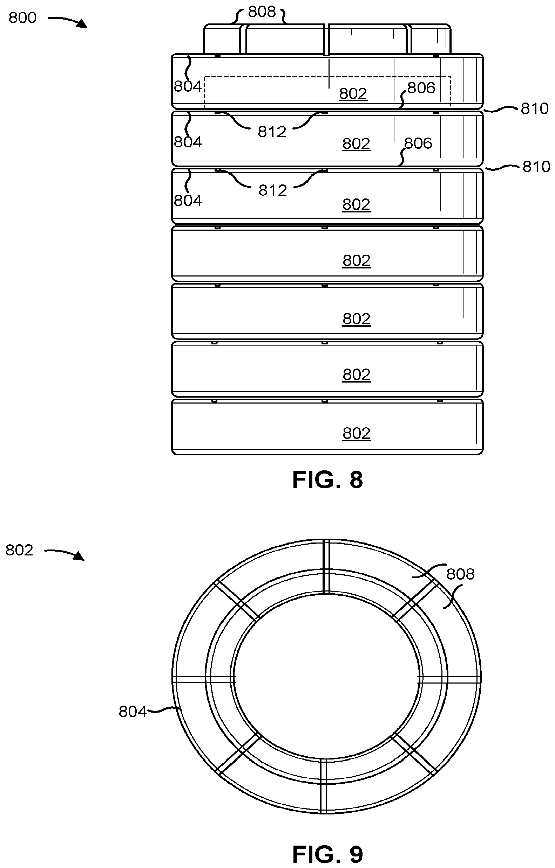

Figs. 4-9 are diagrams of adjustable ring assemblies and/or rings thereof, according to one or more aspects of the present disclosure. Fig. 4 is a front view of an adjustable ring assembly 400 having a plurality of stackable rings 402. Fig. 5 is a front view of an adjustable ring assembly 500 having a plurality of stackable rings 502. Fig. 6 is a front view of an adjustable ring assembly 600 having a plurality of stackable rings 602. Fig. 7 is a bottom isometric view of a ring 602 of the plurality of stackable rings 602. Fig. 8 is a front view of an adjustable ring assembly 800 having a plurality of stackable rings 802. Fig. 9 is a top view of a ring 802 of the plurality of stackable rings 802.

It should be understood that the adjustable ring assembly 400, 500, 600, 800 may correspond to the adjustable ring assembly 204 of the filtration device 200 of Figs. 2-3. Likewise, one or more of the plurality of stackable rings 402, 502, 602, 802 may correspond to one or more of the plurality of stackable rings 230 of the adjustable ring assembly 204.

As shown in Fig. 4, the adjustable ring assembly 400 includes a plurality of stackable rings 402 arranged in a stack (e.g., to be received by the body portion 210 of the guide member 202). Each ring 402 includes an upper surface 404 and a lower surface 406. The upper surface 404 includes a plurality of teeth 408. Each of the plurality of teeth 408 has a shape in a form of a substantially equilateral triangle. The lower surface 406 is substantially planar. Thus, when the plurality of stackable rings 402 are stacked together, the lower surface 406 of one ring 402 and the upper surface 404 of an adjacent ring 402 together form a junction 410. The junction 410 defines a plurality of openings 412 that are configured to fluidly communicate with the plurality of holes 228. Each of the plurality of openings 412, like the plurality of teeth 408, has a shape in a form of a substantially equilateral triangle. It should be understood, however, that other shapes and/or arrangements of the plurality of stackable rings 402 are possible. For example, the lower surface 406 may include the plurality of teeth 408 and the upper surface 404 may be planar. As a further example, the plurality of teeth 408 and the plurality of openings 412 may be substantially square.

As shown in Fig. 5, the adjustable ring assembly 500 includes a plurality of stackable rings 502 arranged in a stack (e.g., to be received by the body portion 210 of the guide member 202). Each ring 502 includes an upper surface 504 and a lower surface 506. The upper surface 504 includes a first plurality of teeth 508. The upper surface 504 includes a second plurality of teeth 510 that are substantially identical to the first plurality of teeth 508. Each of the first plurality of teeth 508 and the second plurality of teeth 510 has a shape substantially in a form of an isosceles trapezoid. Thus, when the plurality of stackable rings 502 are stacked together, the first plurality of teeth 508 of one ring 502 substantially interlock with the second plurality of teeth 510 of an adjacent ring 502 to form a junction 512. The junction 512 defines a plurality of openings 514 that are configured to fluidly communicate with the plurality of holes 228. Each of the plurality of openings 514 has a shape in a form of a substantially equilateral triangle. It should be understood, however, that other shapes and/or arrangements of the plurality of stackable rings 502 are possible. For example, the first plurality of teeth 508 and the second plurality of teeth 510 may be substantially rectangular. In such an example, the plurality of openings 514 may be substantially square.

As shown in Fig. 6, the adjustable ring assembly 600 includes a plurality of stackable rings 602 arranged in a stack (e.g., to be received by the body portion 210 of the guide member 202). Each ring 602, which has a shape substantially in a form of a truncated cone, includes an upper tapered surface 604, and as shown by Fig. 7, a lower tapered surface 706. The lower tapered surface 706 includes a plurality of ridges 708. Each the plurality of ridges 708 has a shape substantially in a form of a rectangular prism. Thus, when the plurality of stackable rings 602 are stacked together, a portion of the lower tapered surface 706 of one ring 602 and a portion of the upper tapered surface 604 of an adjacent ring 602 together form a junction 610. The junction 610 defines a plurality of openings 612 (e.g., as shown in part in Fig. 6) that are configured to fluidly communicate with the plurality of holes 228. Each of the plurality of openings 612 has a shape substantially in a form of a square. It should be understood, however, that other shapes and/or arrangements of the plurality of stackable rings 602 are possible. For example, each of the plurality of ridges 708 may have a shape substantially in a form of a trapezoidal prism. In such an example, the plurality of openings 612 may be substantially triangular.

As shown in Fig. 8, the adjustable ring assembly 800 includes a plurality of stackable rings 802 arranged in a stack (e.g., to be received by the body portion 210 of the guide member 202). Each ring 802 includes an upper stepped surface 804 (as shown in further detail in Fig. 9) and a lower stepped surface 806. The upper stepped surface 804 includes a plurality of ridges 808. Thus, when the plurality of stackable rings 802 are stacked together, the lower stepped surface 806 of one ring 802 and the upper stepped surface 804 of an adjacent ring 802 together form a junction 810. The junction 810 defines a plurality of openings 812 that are configured to fluidly communicate with the plurality of holes 228. Each of the plurality of openings 812 has a shape substantially in a form of a square. It should be understood, however, that other shapes and/or arrangements of the plurality of stackable rings 802 are possible. For example, in addition to and/or as an alternative to the upper stepped surface 804 including the plurality of ridges 808, the lower stepped surface 806 may include the plurality of ridges 808.

As set forth above, each of the plurality of openings 412, 514, 612, 812 may have a shape in a form of a substantially regular polygon. A side of the substantially regular polygon may have a length in a range of approximately 60 micrometers (µm) to approximately 70 µm. For example, the length may be approximately 65 µm. Thus, the adjustable ring assembly 400, 500, 600, 800 is configured to prevent debris particles having a first dimension and/or a second dimension larger than the length from passing therethrough. In other words, the adjustable ring assembly 400, 500, 600, 800 is configured to filter the fuel in two dimensions.

As indicated above, Figs. 4-9 are provided as an example. Other examples may differ from what is described with regard to Figs. 4-9. The adjustable ring assembly 400, 500, 600, 800 may include additional components, fewer components, different components, differently arranged components, and/or differently shaped components than those shown in Figs. 4-9.

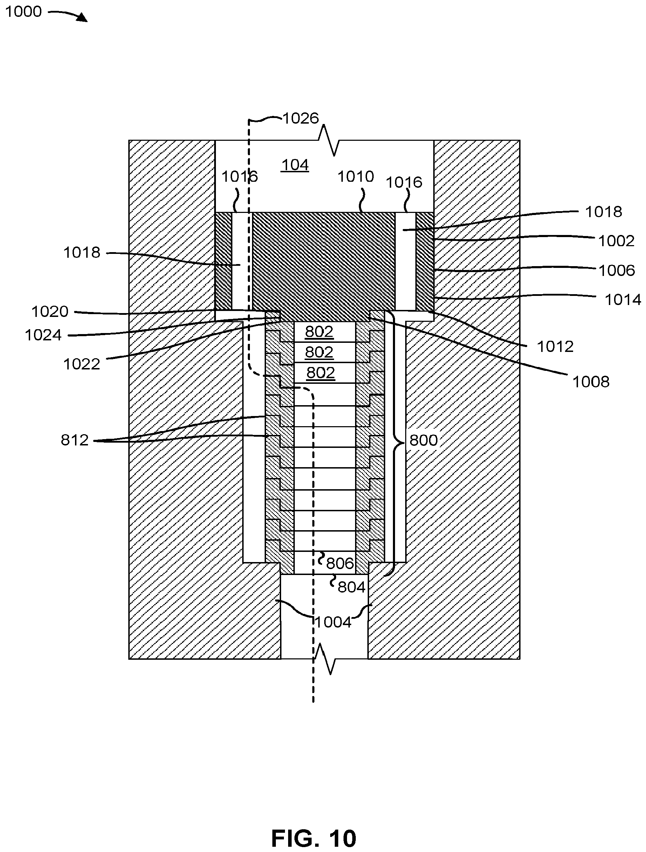

Fig. 10 is a diagram of a filtration device 1000, according to one or more aspects of the present disclosure. Similar to that shown in Fig. 3, Fig. 10 is a cross-sectional view of the filtration device 1000 in an assembled state within the passage 104 of a fuel device (e.g., an inlet of a fuel injector 108, an outlet of a fuel accumulator, and/or a fuel line). It should be understood that the filtration device 1000 may correspond to one or more of the plurality of filtration devices 106 of the fuel system 100 of Fig. 1.

As shown in Fig. 10, the filtration device 1000 includes a guide member 1002 and the adjustable ring assembly 800. The guide member 1002 is structured and arranged to guide fuel along the passage 104 into the adjustable ring assembly 800. The adjustable ring assembly 800 is structured and arranged to minimize a possibility of debris particles within the fuel obstructing flow of the fuel and/or damaging the fuel injector 108 (e.g., of the plurality of fuel injectors 108). To support the adjustable ring assembly 800, the passage 104 includes a ledge 1004. Thus, the passage 104 is configured to clamp the adjustable ring assembly 800 between the guide member 1002 and the ledge 1004. To withstand fuel pressure in a range from approximately 25,000 psi to approximately 36,000 psi, the filtration device 1000 may be formed of steel (e.g., American Iron and Steel Institute (AISI) 4000 steel and/or AISI 4120 steel) or another type of metal.

The guide member 1002 includes a main portion 1006 and a projecting portion 1008. The main portion 1006, which is substantially cylindrical, includes an upper surface 1010, a lower surface 1012, and a circumferential surface 1014 connecting the upper surface 1010 to the lower surface 1012. The upper surface 1010 includes a plurality of upper openings 1016 that communicate respectively with a plurality of holes 1018 that extends along a longitudinal direction from the upper surface 1010 to the lower surface 1012 of the main portion 1006. The circumferential surface 1014 is configured to be fixedly mounted within the passage 104 (e.g., via a friction-fit attachment, via a threaded attachment, or a different type of attachment). The projecting portion 1008, which may be substantially cylindrical, includes a first end 1020, a second end 1022, and an outer surface 1024 that connects the first end 1020 to the second end 1022. The first end 1020 is integrally connected to the lower surface 1012 of the main portion 1006.

To securely fit within the passage 104, the circumferential surface 1014 of the main portion 1006 may have a diameter substantially equal to the diameter of the passage 104. For example, the diameter of the circumferential surface 1014 may be approximately 6 millimeters (mm). To provide a seat for the adjustable ring assembly 800, the outer surface 1024 of the projecting portion 1008 may have a diameter smaller than an inner diameter of each of the plurality of stackable rings 802. For example, the diameter of the outer surface 1024 may be in a range from approximately 1.5 mm to approximately 3.5 mm. So as to not interfere with a flow of the fuel, the projecting portion 1008 may have a length in the longitudinal direction that is less than a height of a ring 802. For example, the length may be in a range of approximately 0.5 mm to approximately 1.5 mm. Other shapes and dimensions of the guide member 1002 are possible.

The adjustable ring assembly 800, as described above in connection with Figs. 8-9, includes the plurality of stackable rings 802. However, as implemented within the filtration device 1000, the adjustable ring assembly 800 has an inverted arrangement relative to an arrangement shown in Fig. 8. Thus, the upper stepped surface 804, including the plurality of ridges 808, faces a downward direction, and the lower stepped surface 806 faces an upward direction. Due to the inverted arrangement, the adjustable ring assembly 800 allows the fuel to travel from an exterior of the adjustable ring assembly 800 to an interior of the adjustable ring assembly.

In use, when the filtration device 1000 is in secured within the passage 104 of the fuel device, as shown in Fig. 10, the fuel may travel along any number of paths to pass through the filtration device 1000. For example, while traveling along a path 1026, the fuel may enter one of the plurality of upper openings 1016 of the guide member 1002 and flow along the respective hole 1018. The fuel may exit the hole 1018, flow through a space between an exterior of the filtration device 1000 and a surface of the passage, and pass through the adjustable ring assembly 800. In such a process, the adjustable ring assembly 800 may prevent the debris particles from exiting the space and traveling further along the passage 104.

As indicated above, Fig. 10 is provided as example. Other examples may differ from what is described with regard to Fig. 10. The filtration device 1000 may include additional components, fewer components, different components, differently arranged components, and/or differently shaped components than those shown in Fig. 10. For example, the adjustable ring assembly 800 may be replaced with the adjustable ring assembly 400, the adjustable ring assembly 500, and/or the adjustable ring assembly 600.

### Industrial Applicability

The filtration device 106, 200, 1000 of the present disclosure is particularly applicable within the passage 104 of the fuel system 100. As indicated above, the passage 104 may be within a fuel device, such as a fuel line, an outlet of a fuel accumulator, an inlet of the fuel injector 108, or another device. The fuel system 100 may be configured to utilize fuel (e.g., diesel fuel) to propel a vehicle (e.g., a motor vehicle, a railed vehicle, a watercraft, an aircraft), power a generator, or otherwise convert chemical energy into mechanical work.

Because a size of the filtration device 106, 200, 1000 may be adjusted (e.g., by adding or removing one or more rings 230, 402, 502, 602, 802 from the adjustable ring assembly 204, 400, 500, 600, 800), the filtration device 106, 200, 1000 may be tailored to achieve a desired degree of filtration. Thus, the filtration device 106, 200, 1000 may have improved performance and/or wider applicability compared to a filtration device having a fixed size. Additionally, due to an increased thickness of the adjustable ring assembly 204, 400, 500, 600, 800, the filtration device 106, 200, 1000 is designed to withstand the fuel pressure (e.g., in a range from approximately 25,000 psi to approximately 36,000 psi) and is less susceptible to fracture. As a result, the filtration device 106, 200, 1000 may have a greater service life and reduce costs associated with replacement and/or repair of the filtration device 106, 200, 1000. Furthermore, by using the plurality of openings 412, 514, 612, 812, rather than elongated slots, to filter the debris particles, the filtration device 106, 200, 1000 is capable of blocking debris particles that may have otherwise passed through the elongated slots. Thus, the filtration device 106, 200, 1000 has improved filtration capability, and as a result, may extend service life of the fuel injector 108 and reduce costs associated with replacement and/or repair of the fuel injector 108.

The foregoing disclosure provides illustration and description, but is not intended to be exhaustive or to limit the implementations to the precise form disclosed. Modifications and variations may be made in light of the above disclosure or may be acquired from practice of the implementations. Furthermore, any of the implementations described herein may be combined unless the foregoing disclosure expressly provides a reason that one or more implementations cannot be combined. Even though particular combinations of features are recited in the claims and/or disclosed in the specification, these combinations are not intended to limit the disclosure of various implementations. Although each dependent claim listed below may directly depend on only one claim, the disclosure of various implementations includes each dependent claim in combination with every other claim in the claim set.

As used herein, "a," "an," and a "set" are intended to include one or more items, and may be used interchangeably with "one or more." Further, as used herein, the article "the" is intended to include one or more items referenced in connection with the article "the" and may be used interchangeably with "the one or more." Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of'). Further, spatially relative terms, such as "below," "lower," "above," "upper," and the like, may be used herein for ease of description to describe one element or feature's relationship to another element(s) or feature(s) as illustrated in the figures. The spatially relative terms are intended to encompass different orientations of the apparatus, device, and/or element in use or operation in addition to the orientation depicted in the figures. The apparatus may be otherwise oriented (rotated 90 degrees or at other orientations) and the spatially relative descriptors used herein may likewise be interpreted accordingly.

## Claims

1. A filtration device (106, 200, 1000), comprising:
a guide member (202, 1002) that is configured to be secured to an interior of a fuel device,
wherein the guide member (202, 1002) has a plurality of holes (228, 1018) to guide fuel therethrough; and
an adjustable ring assembly (204, 400, 500, 600, 800) that is configured to be positioned within the interior of the fuel device to filter the fuel flowing through the fuel device,
wherein the adjustable ring assembly (204, 400, 500, 600, 800) has a plurality of stackable rings (230, 402, 502, 602, 802) that are concentrically aligned,
wherein a junction (410, 512, 610, 810) between a first ring (230, 402, 502, 602, 802) and a second ring (230, 402, 502, 602, 802), of the plurality of stackable rings (230, 402, 502, 602, 802), defines a plurality of openings (412, 514, 612, 812) that fluidly communicate with the plurality of holes (228, 1018),
wherein the plurality of openings (412, 514, 612, 812) are smaller, respectively, than the plurality of holes (228, 1018).

2. The filtration device (106, 200) of claim 1, further comprising:
a support member (206) that is configured to be attached to the guide member (202) to support the adjustable ring assembly (204, 400, 500, 600, 800) thereon.

3. The filtration device (106, 200) of any of claims 1-2, wherein:
the junction (410) between the first ring (230, 402) and the second ring (230, 402) includes a lower surface (406) of the first ring (230, 402) and an upper surface (404) of the second ring (230, 402, 502, 602, 802);
the lower surface (406) is substantially planar; and
the upper surface (404) includes a plurality of teeth (408) that contact the lower surface (406) to define the plurality of openings (412).

4. The filtration device (106, 200) of any of claims 1-2, wherein:
the junction (512) between the first ring (230, 502) and the second ring (230, 502) includes a lower surface (506) of the first ring (230, 502) and an upper surface (504) of the second ring (230, 502);
the lower surface (506) includes a first plurality of teeth (510); and
the upper surface (504) includes a second plurality of teeth (508) that substantially interlock with the first plurality of teeth (510) to define the plurality of openings (514).

5. The filtration device (106, 200) of any of claims 1-2, wherein:
the junction (610) between the first ring (230, 602) and the second ring (230, 602) includes a lower tapered surface (706) of the first ring (230, 602) and an upper tapered surface (604) of the second ring (230, 602); and
the lower tapered surface (706) includes a plurality of ridges (708) that contact the upper tapered surface (604) to define the plurality of openings (612).

6. The filtration device (106, 200) of any of claims 1-2, wherein:
the junction (810) between the first ring (230, 802) and the second ring (230, 802) includes a lower stepped surface (806) of the first ring (230, 802) and an upper stepped surface (804) of the second ring (230, 802); and
the upper stepped surface (804) includes a plurality of ridges (808) that contact the lower stepped surface (806) to define the plurality of openings (812).

7. An adjustable ring assembly (204, 400, 500, 600, 800) that is configured to be positioned within a passage (104) of a fuel device for two-dimensional filtration of fuel, the adjustable ring assembly (204, 400, 500, 600, 800) comprising:
a plurality of stackable rings (230, 402, 502, 602, 802) that are concentrically aligned,
wherein a junction (410, 512, 610, 810) between a first ring (230, 402, 502, 602, 802) and a second ring (230, 402, 502, 602, 802), of the plurality of stackable rings (230, 402, 502, 602, 802), defines a plurality of openings (412, 514, 612, 812) that are configured to prevent debris particles within the fuel from passing through the adjustable ring assembly (204, 400, 500, 600, 800),
wherein an opening (412, 514, 612, 812), of the plurality of openings (412, 514, 612, 812), has a shape in a form of a substantially regular polygon.

8. The adjustable ring assembly (204, 400, 500, 600, 800) of claim 7, wherein the substantially regular polygon is a substantially equilateral triangle or substantially square.

9. The adjustable ring assembly (204, 400, 500, 600, 800) of any of claims 7-8, wherein:
a side of the substantially regular polygon has a length in a range of approximately 60 micrometers to approximately 70 micrometers; and
each ring (230, 402, 502, 602, 802), of the plurality of stackable rings (230, 402, 502, 602, 802), has a thickness, along a radial direction, in a range of approximately 1 millimeter to approximately 2 millimeters.

10. The adjustable ring assembly (204, 400, 500, 600, 800) of any of claims 7-9, wherein each ring (230, 402, 502, 602, 802), of the plurality of stackable rings (230, 402, 502, 602, 802), is configured to withstand a fuel pressure in a range of approximately 29,000 pounds per square inch to approximately 36,000 pounds per square inch.
